# EUROPEAN PATENT APPLICATION

(11) **EP 4 342 610 A1**
(43) Date of publication of application: **27.03.2024**
(21) Application number: 22197402.5
(22) Date of filing: 23.09.2022
(51) Int. Cl.: B23B 51/00, B23B 51/02, B28D 1/14

(54) **MASONRY DRILL HEAD**

(71) Applicant: CERATIZIT Hard Material Solutions S.à r.l., 8232 Mamer (LU); Ceratizit Luxembourg Sàrl, 8232 Mamer (LU)
(72) Inventor: Magin, Michael, 8232 Mamer (LU); Picco, Luca, 8232 Mamer (LU); Buono, Robin, 8232 Mamer (LU); Laschiazza, Cecilio, 8232 Mamer (LU)
(74) Representative: Ciesla, Dirk

(57) **Abstract**

A masonry drill head (100) made from a sintered cemented carbide, characterized in that the masonry drill head has an at least section-wise planar joining end for heat induced joining to a shaft, a working end (104) for shattering masonry material under a percussive motion, at least two conveying webs (101a, 101b) each emerging from the joining end and at least two conveying grooves each extending between two of the conveying webs (101a, 101b), wherein a cross sectional solid material area of the masonry drill head increases towards the joining end, such that a masonry material debris intake of at least one of the conveying grooves increases towards the working end (104).

## Description

The present invention relates to masonry drill heads according to the preambles of claims 1, 10 and 13.

Masonry drill heads are designed to drill holes into masonry materials, e.g., concrete, brick stones, granite, under an axial percussive motion by which the masonry material is shattered into debris, usually shattered into a dust-like state, and an additional conveying rotatory motion by which the debris is transported out of the hole. Thus, masonry drill heads are different from metal cutting drill heads because metal cutting drill heads are designed for scraping a cutting edge into a metal surface under continuous chip formation and continuous chip transport. In other the words the primary material removal mechanisms are different.

Masonry drill heads are also different from wood working drill heads, since also wood working drill heads have a different primary material removal mechanism not employing a percussive motion.

The drill bit shown in EP 1 865 144 A1 does not optimally transport masonry material debris out of a hole which results in longer drilling times and reduced lifetimes of the drill bit.

The objective of the present invention is to provide a masonry drill head which transports masonry material debris better out of a hole and has at the same time both better joining properties for heat induced joining to a shaft.

The objective is solved by a masonry drill head according to claim 1.

The masonry drill head according to a claim 1 is made from a sintered cemented carbide and has an at least section-wise planar joining end for heat induced joining to a shaft, a working end for shattering masonry material under a percussive motion, at least two conveying webs each emerging from the joining end and at least two conveying grooves each extending between two of the conveying webs, wherein a cross-sectional solid material area of the masonry drill head increases towards the joining end, such that a masonry material debris intake of at least one of the conveying grooves increases towards the working end. Thus, the masonry material debris intake increases opposite to the increase of the cross-sectional solid material area.

The masonry drill head according to claim 1 improves masonry material debris transport away from the working end while at the same time geometrically strengthening the joining end and improving a masonry material debris exit on parts of the joining end allowing for an improved joining to a shaft.

The cross-sectional solid material area is formed by the sintered cemented carbide of the masonry drill head, i.e., the "air" area encompassed by the conveying grooves is not part of the cross-sectional solid material area.

Examples for "heat induced joining" are welding, brazing and soldering.

Preferably the joining end is free of inward and/or outward protrusions since this improves heat induced joining, especially welding, on a shaft with a shaft front side. The joining end remains at least section-wise planar when it has a circumferentially extending chamfer.

Typically, the working end covers each of the conveying webs by a roof-shaped top-structure having a working edge as a ridge-line from which an inclined front leading surface and an inclined front trailing surface extend towards the joining end on both side of the working edge. "leading" and "trailing" regard to a given rotation direction of the masonry drill.

The leading front surfaces and trailing front surfaces are designed and arranged for a front-side percussion contact with the masonry material. Said roof-shaped top-structure is a monolithic part of the masonry drill head.

The sintered cemented carbide has a carbide skeleton structure formed by carbide grains, e.g., tungsten carbide grains, sintered together and has skeleton spaces filled with a metallic base alloy; base alloy means that from 70 weight percent to 100 weight percent with respect to the base alloy composition are formed by a metallic alloying element, e.g. cobalt, nickel or iron, or by two metallic alloying elements, e.g., cobalt + nickel, cobalt + iron, nickel + iron, or by three metallic alloying elements, e.g., cobalt + nickel + iron. Preferably, the base alloy has chromium has a minor alloying element.

The carbide, the carbide grains are made from, preferably tungsten carbide, amounts preferably from 85 weight percent to 95 weight percent, more preferred from 90 weight percent to 94 weight percent, most preferred from 91 weight percent to 93 weight percent with respect to the entire sintered cemented carbide composition.

Preferred embodiments of the masonry drill head according to claim 1 will be described in the following.

According to a preferred embodiment the cross-sectional solid material area of the masonry drill head increases towards the joining end by a thickening of at least one of the conveying webs towards the joining end. This is advantageous since the material debris intake increases towards the working end without thereby geometrically weakening the masonry drill head centrally.

According to a preferred embodiment the cross-sectional solid material area of the masonry drill head increases towards the joining end by a thickening of at least two of the conveying webs, preferably each of conveying web, towards the joining end. This is advantageous since the material debris intake increases even further towards the working end without thereby geometrically weakening the masonry drill head centrally.

According to a preferred embodiment the masonry drill head has three or four conveying webs emerging from the joining end. This is advantageous over two conveying webs in that the masonry drill head has an improved circumferential guiding in a drill hole.

According to a preferred embodiment the at least two conveying webs touch an outer working circle at the joining end, wherein the cross-sectional solid material area at the joining end lies in the range from 40 % to 90 % of the area of the outer working circle. The joining end has thus a relatively large contact area relative to the outer working circle which improves it heat induced joining, preferably welding, onto a shaft, but at the same time yields a relatively large masonry debris intake at the joining end.

According to a preferred embodiment at least one of the conveying webs is twisted. This increases an axial masonry debris transport rate towards the joining end. Preferably at least two of the conveying webs are twisted, even more preferred is each conveying web twisted.

According to a preferred embodiment the twisted conveying web has a twist angle in the range from 15° to 45°. The twist angle in the range from 15° to 45° yields an improved compromise between suppressing masonry debris clogging and increasing the axial masonry debris transport rate towards the joining end. The twist angle is measured on a trailing edge or on a leading edge of the twisted conveying web in that a tangent to the trailing edge or the leading edge spans the twist angle with a reference axis crossing the tangent and extending parallel along a longitudinal axis along which the masonry drill head extends, wherein the twist angle is spanned on parts of the joining end by the tangent and the reference axis in a twist angle plane. The twist angle is preferably constant. "Leading" regards to a rotation direction of the masonry drill head by which the masonry debris material is transported towards the joining end by the twisted conveying web. In that case the rotation direction is the given rotation direction of the masonry drill head.

According to a preferred embodiment the sintered cemented carbide has a Vickers hardness is the range from 1250 HV10 to 1700 HV10, preferably from 1300 HV10 to 1500 HV10. It has been found that from 1250 HV10 to 1700 HV10, preferably from 1300 HV10 to 1500 HV10, increases the wear resistance of the masonry drill head while the masonry drill head is kept tough enough at the same. The Vickers hardness HV10 of the sintered cemented carbide is measured according to the international standard ISO 3878:1991 ("Hardmetals - Vickers hardness test").

According to a preferred embodiment the working end has a percussion knob protruding axially outwards. The percussion knob pre-cracks the masonry material to be drilled in that it is the axially outermost part of the masonry drill head opposite to the joining end while the percussion knob at the same time improves a centering of the masonry drill head.

According to a preferred embodiment the masonry drill head is heat induced joined to a steel shaft. Preferably the masonry drill head is heat induced joined to the steel shaft by welding.

The objective is also solved by a masonry drill head according to claim 10.

The masonry drill head according to claim 10 is made from a sintered cemented carbide, wherein the masonry drill head has an at least section-wise planar joining end for heat induced joining to a shaft, a working end for shattering masonry material under a percussive motion, at least two conveying webs each emerging from the joining end and at least two conveying grooves each extending between two of the conveying webs, wherein at least one of the conveying webs is twisted more on parts of the joining end than on parts of the working end.

The masonry drill head according to claim 10 has the advantage that is has a relatively large masonry material debris intake on parts of the working end while it has at the same time a relatively high axial masonry debris transport rate on parts of the joining end. The latter because the twisted conveying web is twisted more on parts of joining end, the former because the twisted conveying web is twisted less on parts of the working end, i.e., the corresponding conveying groove is axially more open on parts of the working end.

The joining end can have the features, in isolation or in combination, of the joining end described for the masonry drill head according to claim 1.

The sintered cemented carbide can have the features, in isolation or in combination, of the sintered cemented carbide described for the masonry drill head according to claim 1.

Preferred embodiments of the masonry drill head according to claim 10 will be described in the following.

According to a preferred embodiment the twisted conveying web has a twist angle which lies in the range from 15° to 45° on parts of the joining end and in the range from 0° to 15° on parts of the working end. This improves a compromise between receiving a relatively large amount of masonry material debris on parts of the working end and transporting the masonry material debris relatively fast towards the joining end, where a shaft can be joined. The twist angle is measured analogously to the twist angle described for the corresponding preferred embodiment of the masonry drill head according to claim 1.

According to a preferred embodiment at least two of the conveying webs have a twist angle which lies in the range from 15° to 45° on parts of the joining end and in the range from 0° to 15° on parts of the working end. This improves said compromise even further. Thus, preferably each conveying web has a twist angle which lies in the range from 15° to 45° on parts of the joining end and in the range from 0° to 15° on parts of the working end.

According to a preferred embodiment the masonry drill head has three or four conveying webs emerging from the joining end. This is advantageous over two conveying webs in that the masonry drill head has an improved circumferential guiding in a drill hole. Thus, preferably each of the three or four conveying webs has a twist angle which lies in the range from 15° to 45° on parts of the joining end and in the range from 0° to 15° on parts of the working end.

According to a preferred embodiment the masonry drill head is heat induced joined to a steel shaft. Preferably the masonry drill head is heat induced joined to the steel shaft by welding.

The objective is also solved by a masonry drill head according to claim 13.

The masonry drill head according to claim 13 is made from a sintered cemented carbide, wherein the masonry drill head has an at least section-wise planar joining end for heat induced joining to a shaft, a working end for shattering masonry material under a percussive motion, at least two conveying webs each emerging from the joining end and at least two conveying grooves each extending between two of the conveying webs, wherein a cross-sectional solid material area of the masonry drill head increases towards the joining end, such that a masonry material debris intake of at least one of the conveying grooves increases towards the working end, wherein at least one of the conveying webs is twisted more on parts of the joining end than on parts of the working end.

The masonry drill head according to claim 13 combines the advantages described for the masonry drill heads according to claims 1 and 10.

The masonry drill head according to claim 13 can have the features described for the masonry drill heads according to claims 1 and 10, in isolation or in combination.

Preferred embodiments of the masonry drill head according to claim 13 will be described in the following.

In a preferred embodiment the masonry drill head has three or four conveying webs emerging from the joining end towards the working end. The advantages described of having three or four conveying webs are realized accordingly.

The masonry drill head according to claim 1, 10 or 13 is preferably welded to a steel shaft.

Further advantages of the invention will be apparent from the following description of embodiments with reference to the accompanying figures.

The Figures show
- Fig. 1:: a masonry drill head according to a first embodiment in a perspective view;
- Fig. 2:: the masonry drill head according to the first embodiment in a bottom view;
- Fig. 3:: the masonry drill head according to the first embodiment in a side view;
- Fig. 4:: the masonry drill head according to the first embodiment in a further side view;
- Fig. 5:: the masonry drill head according to the first embodiment in a cross-sectional view according to the A-A lines and their viewing arrows depicted in Fig. 3;
- Fig. 6:: the masonry drill head according to the first embodiment in a cross-sectional view according to the B-B lines and their viewing arrows depicted in Fig. 3;
- Fig. 7:: the masonry drill head according to the first embodiment in a top view;
- Fig. 8:: a masonry drill head according to a second embodiment in a perspective view;
- Fig. 9:: the masonry drill head according to the second embodiment in a bottom view;
- Fig. 10:: the masonry drill head according to the second embodiment in a side view;
- Fig. 11:: the masonry drill head according to the second embodiment in a further side view;
- Fig. 12:: the masonry drill head according to the second embodiment in a cross-sectional view according to the A-A lines and their viewing arrows depicted in Fig. 10;
- Fig. 13:: the masonry drill head according to the second embodiment in a cross-sectional view according to the B-B lines and their viewing arrows depicted in Fig. 10;
- Fig. 14:: the masonry drill head according to the second embodiment in a top view;
- Fig. 15:: a masonry drill head according to a third embodiment in a perspective view;
- Fig. 16:: the masonry drill head according to the third embodiment in a bottom view;
- Fig. 17:: the masonry drill head according to the third embodiment in a side view;
- Fig. 18:: the masonry drill head according to the third embodiment in a further side view;
- Fig. 19:: the masonry drill head according to the third embodiment in a cross-sectional view according to the A-A lines and their viewing arrows depicted in Fig. 17;
- Fig. 20:: the masonry drill head according to the third embodiment in a cross-sectional view according to the B-B lines and their viewing arrows depicted in Fig. 17;
- Fig. 21:: the masonry drill head according to the third embodiment in a top view;
- Fig. 22:: a masonry drill head according to a fourth embodiment in a perspective view;
- Fig. 23:: the masonry drill head according to the fourth embodiment in a bottom view;
- Fig. 24:: the masonry drill head according to the fourth embodiment in a side view;
- Fig. 25:: the masonry drill head according to the fourth embodiment in a further side view;
- Fig. 26:: the masonry drill head according to the fourth embodiment in a cross-sectional view according to the A-A lines and their viewing arrows depicted in Fig. 24;
- Fig. 27:: the masonry drill head according to the fourth embodiment in a top view.

### EMBODIMENTS

### First embodiment

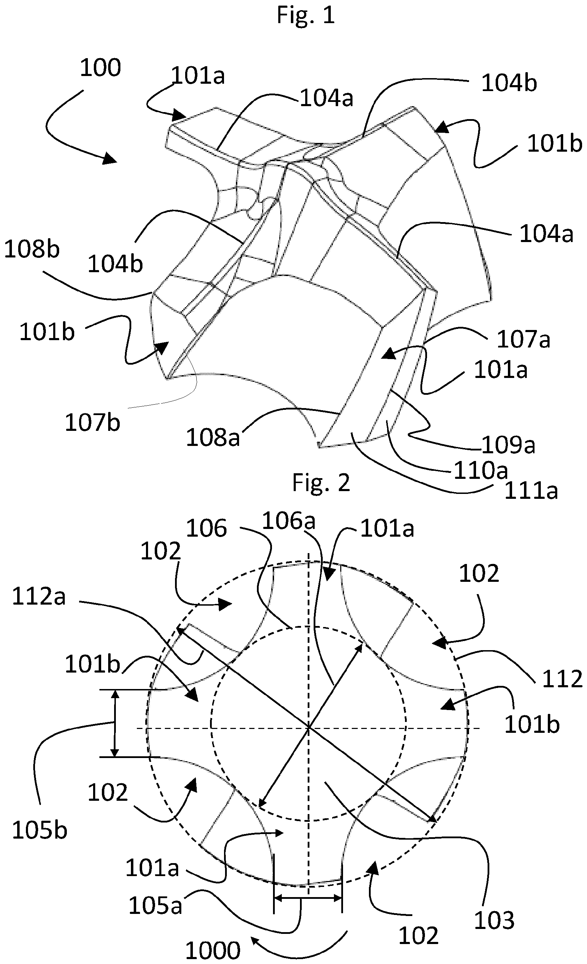

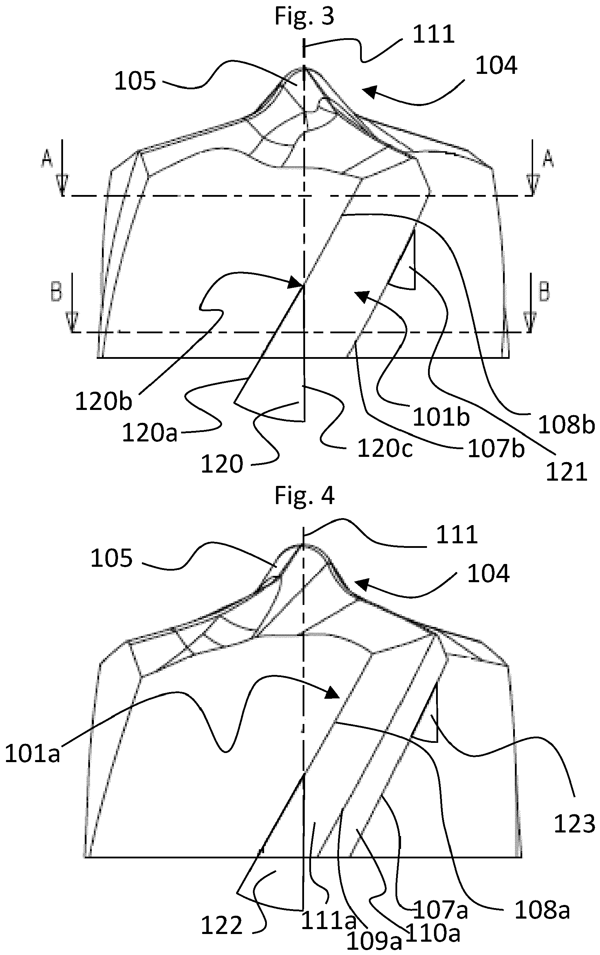

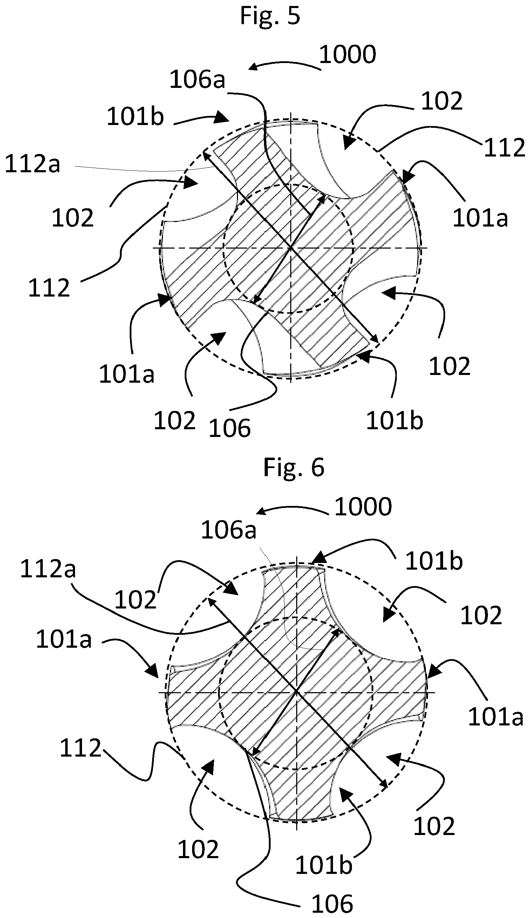

Figs. 1 to Fig. 7 show schematically a masonry drill head 100 according to a first embodiment: Fig. 1 in a perspective view, Fig. 2 in a bottom view with a viewing direction parallel along a longitudinal axis 111, Fig. 3 in a side view with a viewing direction perpendicular to the longitudinal axis 111, Fig. 4 in a further side view with a viewing direction perpendicular to the longitudinal axis 111 and rotated by 90° with respect to the side view in Fig. 4, Fig. 5 in a upper cross-section according to the lines A-A and their viewing direction in Fig. 3, Fig. 5 in a lower cross-section according to the lines B-B and their viewing direction in Fig. 3 and Fig. 6 in top view with a viewing direction parallel along a longitudinal axis 111 but opposite to the viewing direction of Fig. 1.

The masonry drill head 100 has two conveying webs 101a, two conveying webs 100b, four conveying grooves 102, each extending between one of the conveying webs 101a and one of the conveying webs 101b, a joining end 103 and a working end 104. The working end 104 has two main working edges 104a and two minor working edges 104b and a percussion knob 105 from which each of the working edges 104a and 104b extends outwards.

The masonry drill head 100 has a working rotation direction 1000 under which masonry material debris is transported axially downwards towards the joining end 103 by the conveying webs 101a and 101b and thereby by the conveying grooves 102.

The main working edges 104a extend axially more forward than the minor working edges 104b. The percussion knob 105 is the axially most forward part of the masonry drill head 100.

The drill head 100 is made from a sintered cemented carbide having a hardness in the range from 1250 HV10 to 1700 HV10, e. g., 1400 HV10. The Vickers hardness HV10 of the sintered cemented carbide is measured according to the international standard ISO 3878:1991 ("Hardmetals - Vickers hardness test").

A cross-sectional solid material area of the masonry drill head 100 increases towards the joining end 103, such that a masonry material debris intake of each conveying groove 102 increases towards the working end 104.

The cross-sectional solid material area increases in the first embodiment in that a core diameter 106a of a core circle 106 increases towards the joining end 103 whereas a thickness 105a of the conveying webs 101a and a thickness of the conveying webs 101b remains constant towards the joining end 103. This is best seen by a comparison between Fig. 6, which depicts the cross-sectional solid material area axially close to the joining end 103, and Fig. 5, which depicts the cross-sectional solid material area where a leading edge 107a of the conveying webs 101a ends and where a leading edge 107b of the conveying webs 101b ends; Fig. 3 and Fig. 4 are drawn in the same scale.

The web thicknesses 105a and 105b are depicted in Fig. 2 exemplarily, which shows the cross-sectional solid material area at the lowest axial position. The web thickness 105a is measured in the cross-sectional solid material for each conveying web 101a as the distance between the leading edge 107a and a corresponding trailing edge 108a. The web thickness 105b is measured in the cross-sectional solid material for each conveying web 101b as the distance between the leading edge 107b and a corresponding trailing edge 108b.

The conveying grooves 102 end axially where the corresponding leading edge 107a ends. The conveying webs 101a have an intermediate edge 109a extending between the leading edge 107a and the trailing edge 108a such that the conveying webs 101a have each a leading outer surface 110a and a trailing outer surface 111a. The intermediate edges 109a define an outer working circle 112 in each cross-sectional solid material area having an outer working diameter 112a. The working diameter 112a is constant towards the joining end 103.

The joining end 103 is protrusion free. The conveying webs emerge 101a and 101b from the joining end 103 which improves the transition of masonry material debris from the masonry drill head 100 into shaft conveying grooves of a shaft.

The conveying webs 101b are twisted under a twist angle 120 as best seen in Fig. 3. The twist angle 120 is spanned by a tangent 120a being the tangent of an edge point 120b of the trailing edge 108b and a reference axis 120c crossing the edge point 120b and being parallel to the longitudinal axial 111. The twist angle 120 is measured on parts of the joining end 103. The twist angle 120 is measured analogously on the leading edge 107b, as exemplified by a twist angle 121. The twist angle 120 and the twist angle 120 equal each to 30° and are constant along the leading edge 107b and the trailing edge 108b, respectively.

The conveying webs 101b are twisted under a twist angle 122 as best seen in Fig. 4. The twist angle 122 is measured analogously to the twist angle 120 and equals to 30° along the trailing edge 108a. The twist angle 122 is measured analogously on the leading edge 108a as exemplified by a twist angle 123. The twist angle 122 and the twist angle 123 equal each to 30° and are constant along the leading edge 107a and the trailing edge 108a, respectively.

Thus, the conveying webs 101a and 101b result from an extrusion of the joining end 103 along the longitudinal axis 111 while being subject to a constant twist described by the twist angle 120 and thereby by the twist angle 121.

The cross-sectional solid material area depicted in Fig. 5 has increased by 14 % when it reaches the cross-sectional solid material area depicted in Fig. 6, which exemplifies the cross-sectional solid material area increase towards the joining end 103 and yields a corresponding increase of the masonry debris intake of the conveying grooves 102. A preferred range for said increase ranges from 10 % to 60 %, more preferred from 20 % to 40 %.

### Second embodiment

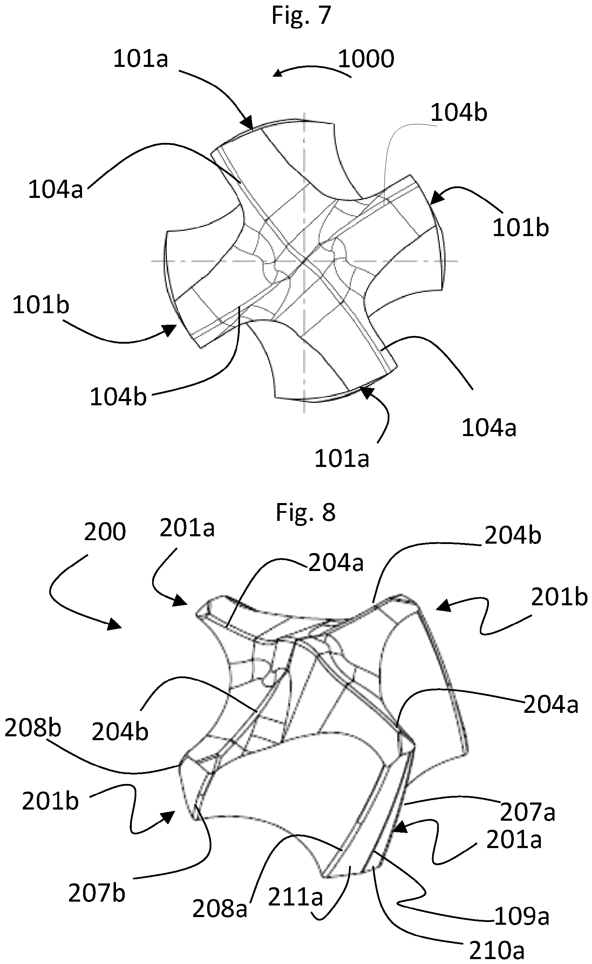

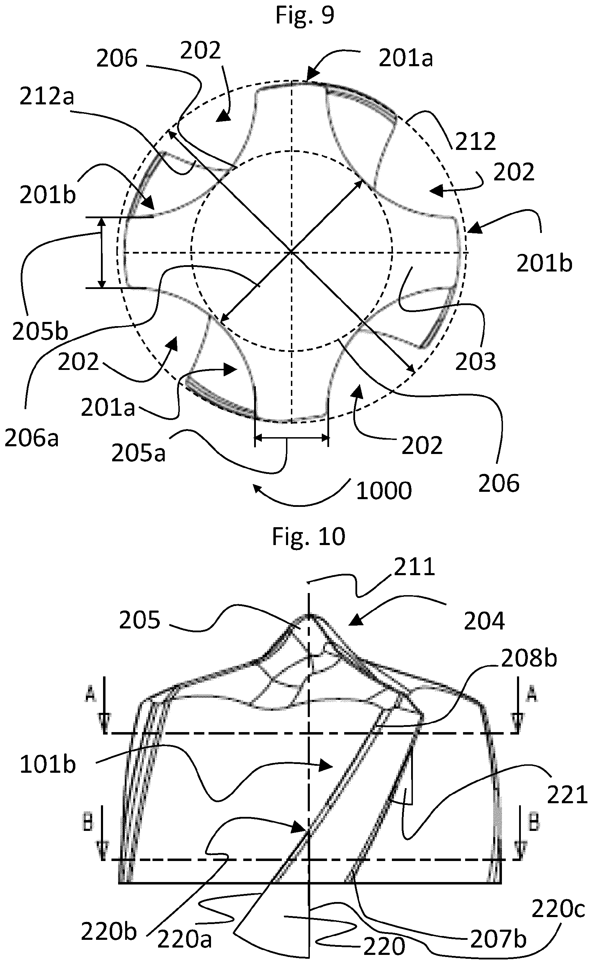

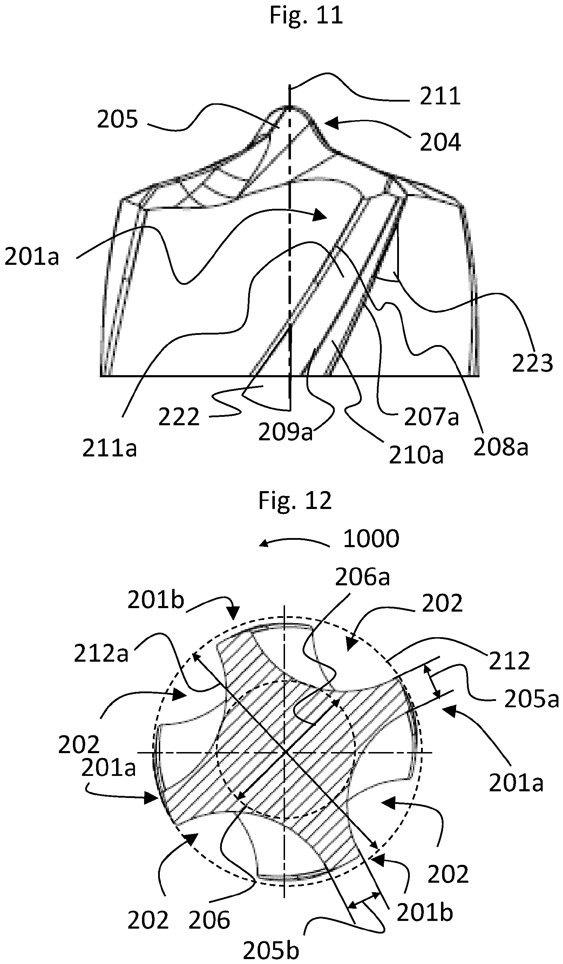

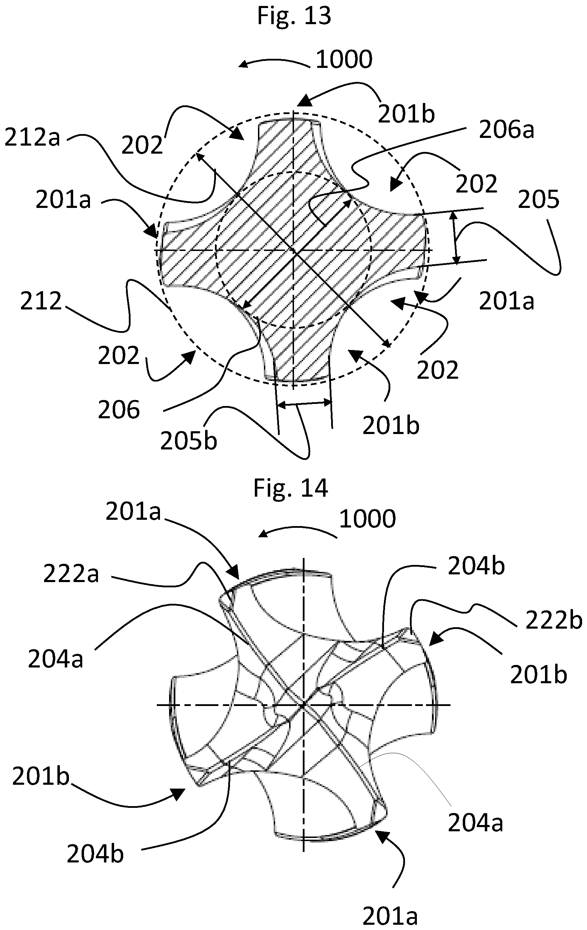

Figs. 8 to Fig. 14 show schematically a masonry drill head 200 according to a second embodiment: Fig. 8 in a perspective view, Fig. 9 in a bottom view with a viewing direction parallel along a longitudinal axis 211, Fig. 10 in a side view with a viewing direction perpendicular to the longitudinal axis 211, Fig. 11 in a further side view with a viewing direction perpendicular to the longitudinal axis 211 and rotated by 90° with respect to the side view in Fig. 10, Fig. 12 in a upper cross-section according to the lines A-A and their viewing direction in Fig. 10, Fig. 13 in a lower cross-section according to the lines B-B and their viewing direction in Fig. 10 and Fig. 14 in top view with a viewing direction parallel along the longitudinal axis 211 but opposite to the viewing direction of Fig. 8.

The masonry drill head 200 has two conveying webs 201a, two conveying webs 201b, four conveying grooves 202, each extending between one of the conveying webs 201a and one of the conveying webs 201b, a joining end 203 and a working end 204. The working end 204 has two main working edges 204a and two minor working edges 204b and a percussion knob 205 from which each of the working edges 204a and 204b extends outwards.

The masonry drill head 200 has the working rotation direction 1000 of the first embodiment under which masonry material debris is transported axially downwards towards the joining end 203 by the conveying webs 201a and 201b and thereby by the conveying grooves 202.

The main working edges 204a extend axially more forward than the minor working edges 204b. The percussion knob 205 is the axially most forward part of the masonry drill head 200.

The drill head 200 is made from a sintered cemented carbide having a hardness in the range from 1250 HV10 to 1700 HV10, e. g., 1400 HV10. The Vickers hardness HV10 of the sintered cemented carbide is measured according to the international standard ISO 3878:1991 ("Hardmetals - Vickers hardness test").

A cross-sectional solid material area of the masonry drill head 200 increases towards the joining end 203, such that a masonry material debris intake of each conveying groove 202 increases towards the working end 204.

The cross-sectional solid material area increases in the second embodiment in that a core diameter 206a of a core circle 206 increases towards the joining end 203 and in that additionally a thickness 205a of the conveying webs 201a and a thickness of the conveying webs 201b increases towards the joining end 203. This is best seen by a comparison between Fig. 13, which depicts the cross-sectional solid material area axially close to the joining end 203, and Fig. 12, which depicts the cross-sectional solid material area where a leading edge 207a of the conveying webs 201a ends and where a leading edge 207b of the conveying webs 201b ends; Fig. 12 and Fig. 13 are drawn in the same scale.

The web thicknesses 205a and 205b are measured analogously to the web thicknesses 105a and 105b, respectively, and are indicated in Figs. 11 and Fig. 12 additionally, such that their contribution to the increase in cross-sectional solid material area towards the joining end 203 is highlighted.

The conveying grooves 202 end axially where the corresponding leading edge 207a ends. The conveying webs 201a have an intermediate edge 209a extending between the leading edge 207a and the trailing edge 208a such that the conveying webs 201a have each a leading outer surface 210a and a trailing outer surface 211a. The intermediate edges 209a define an outer working circle 212 in each cross-sectional solid material area having an outer working diameter 212a. The working diameter 212a is constant towards the joining end 203.

The joining end 203 is protrusion free. The conveying webs emerge 201a and 201b from the joining end 203 which improves the transition of masonry material debris from the masonry drill head 200 into shaft conveying grooves of a shaft.

The conveying webs 201b are twisted under a twist angle 220 as best seen in Fig. 10. The twist angle 220 is spanned by a tangent 220a being the tangent of an edge point 220b of the trailing edge 208b and a reference axis 220c crossing the edge point 220b and being parallel to the longitudinal axial 211. The twist angle 220 is measured on parts of the joining end 203. The twist angle 220 is measured analogously on the leading edge 207b, as exemplified by a twist angle 221. The twist angle 220 and the twist angle 221 equal each to 30° and are constant along the leading edge 207b and the trailing edge 208b, respectively.

The conveying webs 201a are twisted under a twist angle 222 as best seen in Fig. 11. The twist angle 222 is measured analogously to the twist angle 220 and equals to 30° along the trailing edge 208a. The twist angle 222 is measured analogously on the leading edge 207a as exemplified by a twist angle 223. The twist angle 222 and the twist angle 223 equal each to 30° and are constant along the leading edge 207a and the trailing edge 208a, respectively.

Thus, the conveying webs 201a and 201b result from an extrusion of the joining end 203 along the longitudinal axis 211 while being subject to a constant twist described by the twist angle 220 and thereby by the twist angle 221, wherein each of the conveying webs 201a and 201b becomes thinner towards the working end 204.

The main working edges 204a are terminated radially by triangular facets 222a and the minor working edges 204b by triangular facets 222b, as best seen in Fig. 14.

The cross-sectional solid material area depicted in Fig. 12 has increased by 19 % when it reaches the cross-sectional solid material area depicted in Fig. 13, which exemplifies the cross-sectional solid material area increase towards the joining end 203 and yields a corresponding increase of the masonry debris intake of the conveying grooves 202. A preferred range for said increase ranges from 10 % to 60 %, more preferred from 20 % to 40 %.

### Third embodiment

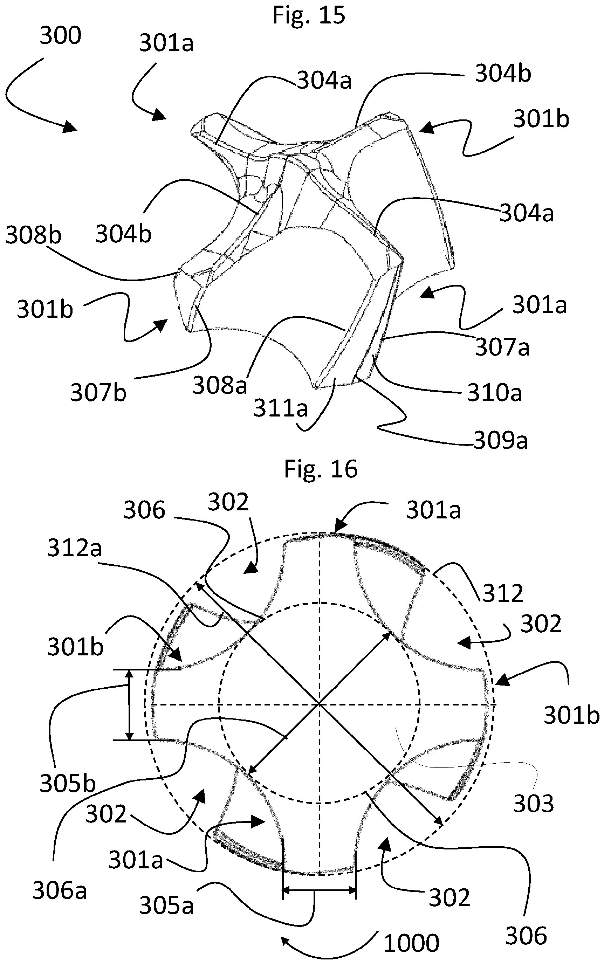

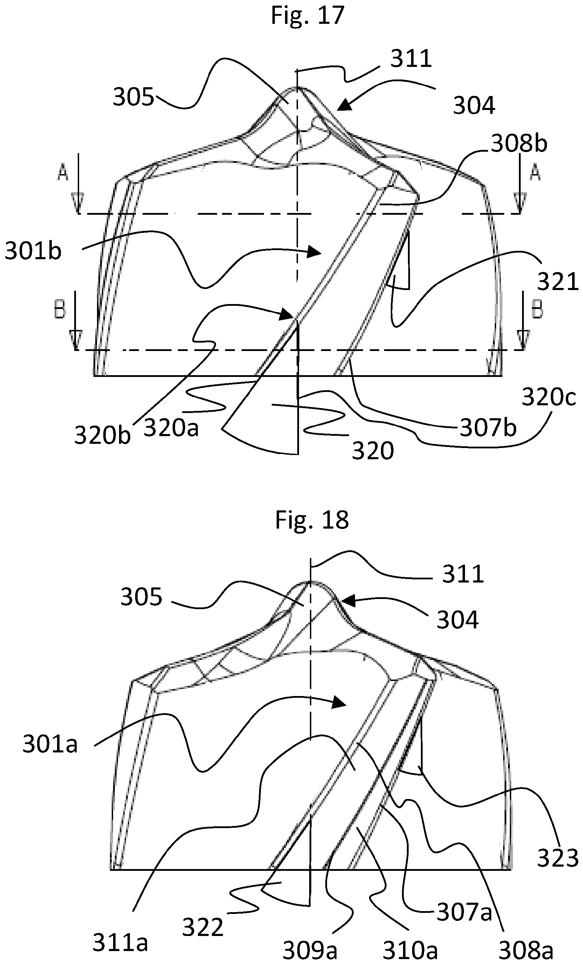

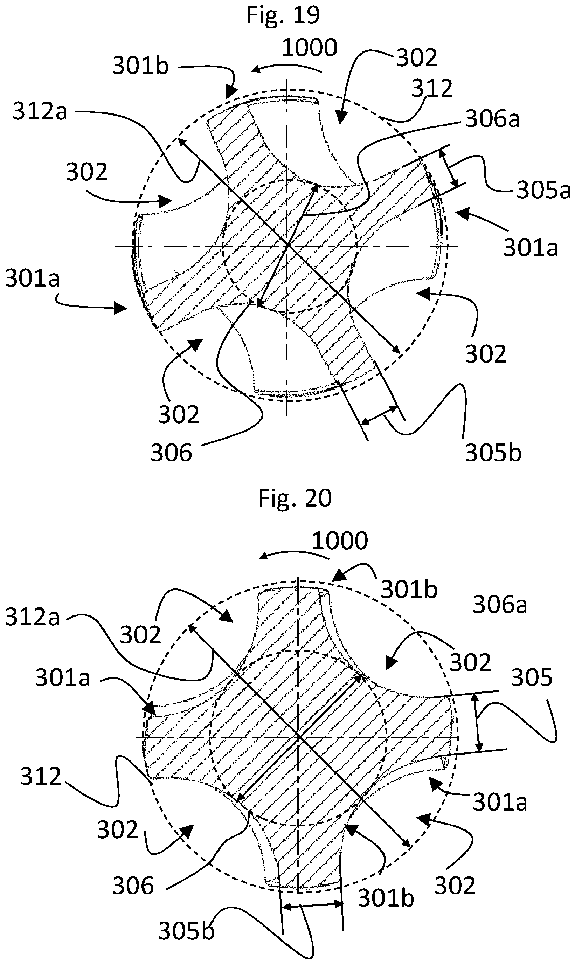

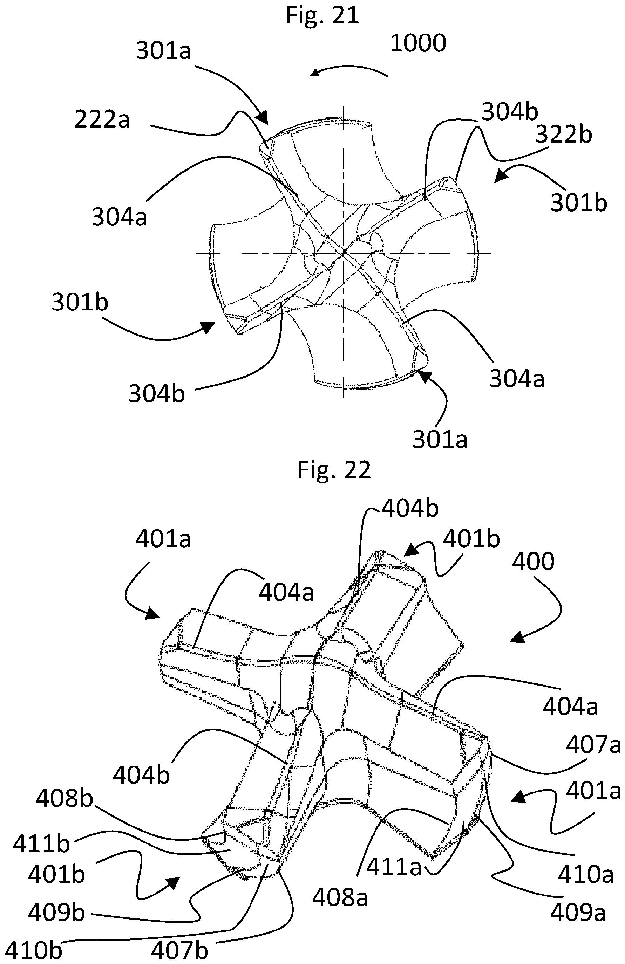

Figs. 15 to Fig. 21 show schematically a masonry drill head 300 according to a third embodiment: Fig. 15 in a perspective view, Fig. 16 in a bottom view with a viewing direction parallel along a longitudinal axis 311, Fig. 17 in a side view with a viewing direction perpendicular to the longitudinal axis 311, Fig. 18 in a further side view with a viewing direction perpendicular to the longitudinal axis 311 and rotated by 90° with respect to the side view in Fig. 17, Fig. 19 in a upper cross-section according to the lines A-A and their viewing direction in Fig. 17, Fig. 20 in a lower cross-section according to the lines B-B and their viewing direction in Fig. 17 and Fig. 21 in top view with a viewing direction parallel along the longitudinal axis 311 but opposite to the viewing direction of Fig. 15.

The masonry drill head 300 has two conveying webs 301a, two conveying webs 301b, four conveying grooves 302, each extending between one of the conveying webs 301a and one of the conveying webs 301b, a joining end 303 and a working end 304. The working end 304 has two main working edges 304a and two minor working edges 304b and a percussion knob 305 from which each of the working edges 304a and 304b extends outwards.

The masonry drill head 300 has the working rotation direction 1000 of the first embodiment under which masonry material debris is transported axially downwards towards the joining end 303 by the conveying webs 301a and 301b and thereby by the conveying grooves 302.

The main working edges 304a extend axially more forward than the minor working edges 304b. The percussion knob 305 is the axially most forward part of the masonry drill head 300.

The drill head 300 is made from a sintered cemented carbide having a hardness in the range from 1250 HV10 to 1700 HV10, e. g., 1400 HV10. The Vickers hardness HV10 of the sintered cemented carbide is measured according to the international standard ISO 3878:1991 ("Hardmetals - Vickers hardness test").

A cross-sectional solid material area of the masonry drill head 300 increases towards the joining end 303, such that a masonry material debris intake of each conveying groove 302 increases towards the working end 304.

The cross-sectional solid material area increases in the third embodiment analogously to the second embodiment, namely in that a core diameter 306a of a core circle 306 increases towards the joining end 303 and in that additionally a thickness 305a of the conveying webs 302a and a thickness of the conveying webs 302b increases towards the joining end 303. This is best seen by a comparison between Fig. 20, which depicts the cross-sectional solid material area axially close to the joining end 303, and Fig. 19, which depicts the cross-sectional solid material area where a leading edge 307a of the conveying webs 302a ends and where a leading edge 307b of the conveying webs 301b ends; Fig. 19 and Fig. 20 are drawn in the same scale.

The web thicknesses 305a and 305b are measured analogously to the web thicknesses 105a and 105b, respectively, and are indicated in Figs. 19 and Fig. 20 additionally, such that their contribution to the increase in cross-sectional solid material area towards the joining end 303 is highlighted.

The conveying grooves 302 end axially where the corresponding leading edge 307a ends. The conveying webs 301a have an intermediate edge 309a extending between the leading edge 307a and the trailing edge 308a such that the conveying webs 301a have each a leading outer surface 310a and a trailing outer surface 311a. The intermediate edges 309a define an outer working circle 312 in each cross-sectional solid material area having an outer working diameter 312a. The working diameter 312a is constant towards the joining end 303.

The joining end 303 is protrusion free. The conveying webs emerge 301a and 301b from the joining end 303 which improves the transition of masonry material debris from the masonry drill head 300 into shaft conveying grooves of a shaft.

The conveying webs 301b are twisted under a twist angle 320 as best seen in Fig. 17. The twist angle 320 is spanned by a tangent 320a being the tangent of an edge point 320b of the trailing edge 308b and a reference axis 320c crossing the edge point 320b and being parallel to the longitudinal axial 311. The twist angle 320 is measured on parts of the joining end 303. The twist angle 320 is measured analogously on the leading edge 307b, as exemplified by a twist angle 321. The twist angle 320 and the twist angle 321 equal each to 30° and are constant along the leading edge 307b and the trailing edge 308b, respectively.

The conveying webs 301a are twisted under a twist angle 322 as best seen in Fig. 11. The twist angle 322 is measured analogously to the twist angle 320 and equals to 30° along the trailing edge 308a. The twist angle 322 is measured analogously on the leading edge 307a as exemplified by a twist angle 323. The twist angle 322 and the twist angle 323 equal each to 30° and are constant along the leading edge 307a and the trailing edge 308a, respectively.

Thus, the conveying webs 301a and 301b result from an extrusion of the joining end 303 along the longitudinal axis 311 while being subject to a constant twist described by the twist angle 320 and thereby by the twist angle 321, wherein each of the conveying webs 301a and 301b becomes thinner towards the working end 304.

The main working edges 304a are terminated radially by triangular facets 322a and the minor working edges 304b by triangular facets 322b, as best seen in Fig. 21.

The cross-sectional solid material area depicted in Fig. 19 has increased by 39 % when it reaches the cross-sectional solid material area depicted in Fig. 20, which exemplifies the cross-sectional solid material area increase towards the joining end 303 and yields a corresponding increase of the masonry debris intake of the conveying grooves 302. A preferred range for said increase ranges from 10 % to 60 %, more preferred from 20 % to 40 %.

### Fourth embodiment

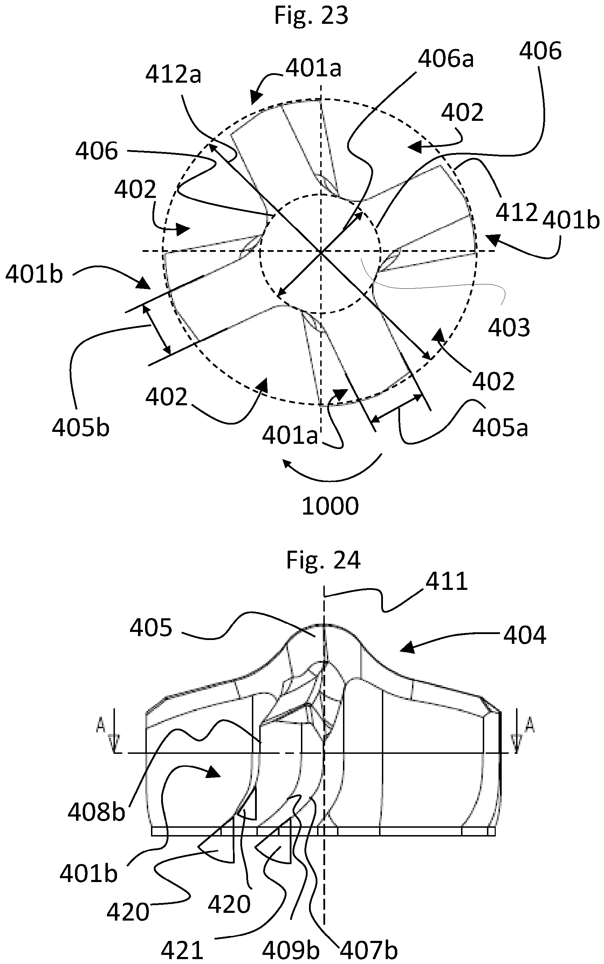

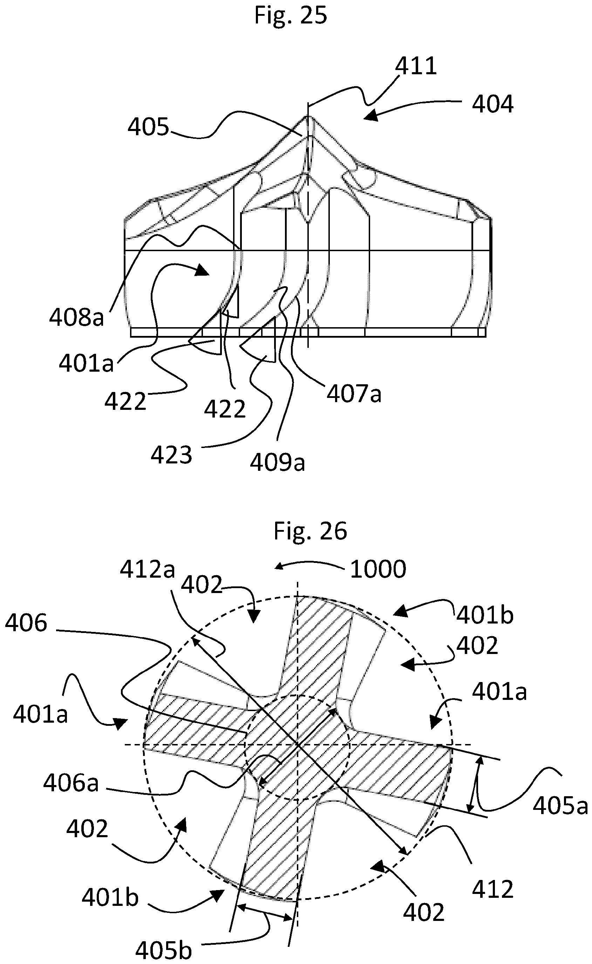

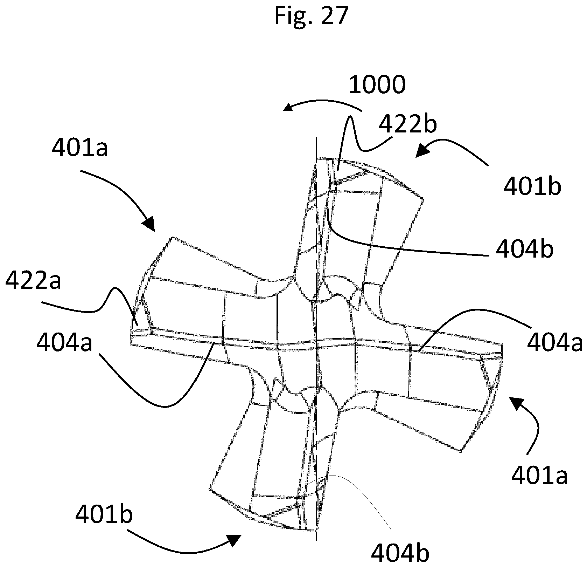

Figs. 22 to Fig. 27 show schematically a masonry drill head 400 according to a fourth embodiment: Fig. 22 in a perspective view, Fig. 23 in a bottom view with a viewing direction parallel along a longitudinal axis 411, Fig. 24 in a side view with a viewing direction perpendicular to the longitudinal axis 411, Fig. 25 in a further side view with a viewing direction perpendicular to the longitudinal axis 411 and rotated by 90° with respect to the side view in Fig. 24, Fig. 26 in a upper cross-section according to the lines A-A and their viewing direction in Fig.24 and Fig. 27 in top view with a viewing direction parallel along the longitudinal axis 411 but opposite to the viewing direction of Fig. 23.

The masonry drill head 400 has two conveying webs 401a, two conveying webs 401b, four conveying grooves 402, each extending between one of the conveying webs 401a and one of the conveying webs 401b, a joining end 403 and a working end 404. The working end 404 has two main working edges 404a and two minor working edges 404b and a percussion knob 405 from which each of the working edges 404a and 404b extends outwards.

The masonry drill head 400 has the working rotation direction 1000 of the first embodiment under which masonry material debris is transported axially downwards towards the joining end 403 by the conveying webs 401a and 401b and thereby by the conveying grooves 402.

The main working edges 404a extend axially more forward than the minor working edges 404b. The percussion knob 405 is the axially most forward part of the masonry drill head 400.

The drill head 400 is made from a sintered cemented carbide having a hardness in the range from 1250 HV10 to 1700 HV10, e. g., 1400 HV10. The Vickers hardness HV10 of the sintered cemented carbide is measured according to the international standard ISO 4878:1991 ("Hardmetals - Vickers hardness test").

A cross-sectional solid material area of the masonry drill head 400 increases towards the joining end 403, such that a masonry material debris intake of each conveying groove 402 increases towards the working end 404.

The cross-sectional solid material area increases in the fourth embodiment in that a core diameter 406a of a core circle 406 increases towards the joining end 403, wherein a thickness 405a of the conveying webs 401a and a thickness of the conveying webs 401b remains constant towards the joining end 403. This is best seen by a comparison between Fig. 23, which depicts the cross-sectional solid material area as exhibited by the joining end 403, and Fig. 25, which depicts the cross-sectional solid material area where a leading edge 407a of the conveying webs 401a ends and where a leading edge 407b of the conveying webs 401b ends; Fig. 23 and Fig. 25 are drawn in the same scale.

The web thicknesses 405a and 405b are measured analogously to the web thicknesses 105a and 105b, respectively, and are indicated in Figs. 11 and Fig. 12 additionally, such that their non-contribution to the increase in cross-sectional solid material area towards the joining end 403 is highlighted.

The conveying grooves 402 end axially where the corresponding leading edge 407a ends. The conveying webs 401a have an intermediate edge 409a extending between the leading edge 407a and the trailing edge 408a such that the conveying webs 401a have each a leading outer surface 410a and a trailing outer surface 411a. The intermediate edges 409a define an outer working circle 412 in each cross-sectional solid material area having an outer working diameter 412a. The working diameter 412a is constant towards the joining end 403.

The conveying webs 401b have an intermediate edge 409b extending between the leading edge 407b and the trailing edge 408b such that the conveying webs 401b have each a leading outer surface 410b and a trailing outer surface 411b. The intermediate edges 409b lie on the outer working circle 412 in each cross-sectional solid material area.

The joining end 403 is protrusion free. The conveying webs emerge 401a and 401b from the joining end 403 which improves the transition of masonry material debris from the masonry drill head 400 into shaft conveying grooves of a shaft.

In contrast to the first, second and third embodiment, the conveying webs 401a and 401b are each twisted more on parts of the joining end 403 than on parts of the working end 404, as best seen in Figs. 24 and 25.

The conveying webs 401b are twisted under a twist angle 420 which is measured analogously to the twist angle 320 on the trailing edge 408b, which decreases towards the working end 404 from 45° to 0°, i.e., 0° means that the trailing edge 408 is parallel to the longitudinal axis 411. The twist angle 420 is measured analogously on the leading edge 407b, as exemplified by a twist angle 421. The twist angle 420 and the twist angle 421 are equal to each other at each axial height position along the longitudinal axis 411.

The conveying webs 401a are twisted under a twist angle 422 as best seen in Fig. 25. The twist angle 422 is measured analogously to the twist angle 420 and decreases towards the working end from 45° to 0° in the same manner. The twist angle 422 is measured analogously on the leading edge 408a as exemplified by a twist angle 423.

Thus, the conveying webs 401a and 401b result from an extrusion of the joining end 403 along the longitudinal axis 411 while being subject to more twisting on parts of the joining end 403 and less twisting on parts of the working end 404, wherein the conveying webs 401a and 401b keep a constant thickness and the core diameter 406a decreases towards the working end 404.

The main working edges 404a are terminated radially by triangular facets 422a and the minor working edges 404b by triangular facets 422b, as best seen in Fig. 21.

In each of the first, second, third and fourth embodiment, each outer working circle 112, 212, 312 and 412 has a working circle area AW and each joining end 103, 203, 303 and 403 a cross-sectional solid material area ASM. In each of the first, second, third and fourth embodiment the ratio between ASM and AW lies in the range from 40 % to 90 %, and also in the ranges from 20 % to 90% and from 30 % to 80 %, which yields an improved compromise between a geometrically strong joining end 103, 203, 303 and 403 and a large enough debris intake of the grooves 102, 202, 302 and 402 at the joining end 103, 203, 303 and 403.

In each of the first, second, third and fourth embodiment the sintered cemented carbide has a skeleton structure made from tungsten carbide grains sintered together and skeleton spaces filled with a metallic base alloy, wherein the composition of the sintered cemented carbide is selected as defined in the description of the preferred embodiments, e.g., the base alloy is cobalt + nickel base alloy, optionally having chromium as a minor alloying element.

### Further embodiments

In further embodiments the masonry drill heads 100, 200, 300 and 400 are each be welded to a shaft, such that the conveying webs 101a, 101b, 201a, 201b, 301a, 301b, 401a and 401b are continued by corresponding conveying webs of the shaft, e.g., the shaft has twisted conveying webs, which having a shaft twist angle at a shaft front side which equals the twist angle 120, 220, 320, 420, respectively, in case of the twist angle 420 its value of the joining end 403 is referred to. The number of the conveying webs of the shaft matches the number of the conveying webs 101a, 101b, 201a, 201b, 301a, 301b, 401a and 401b, i.e., four in case of the masonry drill heads 100, 200, 300 and 400.

## Claims

1. A masonry drill head made from a sintered cemented carbide, **characterized in that** the masonry drill head has an at least section-wise planar joining end (103, 203, 303, 403) for heat induced joining to a shaft, a working end (104, 204, 304, 404) for shattering masonry material under a percussive motion, at least two conveying webs (101a, 101b, 201a, 201b, 301a, 301b, 401a, 401b) each emerging from the joining end (103, 203, 303, 403) and at least two conveying grooves (102, 202, 302, 402) each extending between two of the conveying webs (101a, 101b, 201a, 201b, 301a, 301b, 401a, 401b), wherein a cross-sectional solid material area of the masonry drill head increases towards the joining end (103, 203, 303, 403, such that a masonry material debris intake of at least one of the conveying grooves (102, 202, 302, 402) increases towards the working end (104, 204, 304, 404).

2. The masonry drill head according to claim 1, wherein the cross-sectional solid material area of the masonry drill head increases towards the joining end (103, 203, 303, 403) by a thickening of at least one of the conveying webs (101a, 101b, 201a, 201b, 301a, 301b, 401a, 401b) towards the joining end (103, 203, 303, 403).

3. The masonry drill head according to any of the preceding claims, wherein the cross-sectional solid material area of the masonry drill head increases towards the joining end joining end (103, 203, 303, 403) by a thickening of at least two of the conveying webs (101a, 101b, 201a, 201b, 301a, 301b, 401a, 401b) towards the joining end (103, 203, 303, 403).

4. The masonry drill head according to any of the preceding claims, wherein the masonry drill head has three or four conveying webs (101a, 101b, 201a, 201b, 301a, 301b, 401a, 401b) emerging from the joining end.

5. The masonry drill head according to any of the preceding claims, wherein at least two conveying webs (101a, 101b, 201a, 201b, 301a, 301b, 401a, 401b) touch an outer working circle (112, 212, 312, 412) at the joining end (103, 203, 303, 403), wherein the cross-sectional solid material area at the joining end (103, 203, 303, 403) lies in the range from 40 % to 90 % of the area of the outer working circle.

6. The masonry drill head according to any of the preceding claims, wherein at least one of the conveying webs (101a, 101b, 201a, 201b, 301a, 301b, 401a, 401b) is twisted.

7. The masonry drill head according to claim 6, wherein the twisted conveying web (101a, 101b, 201a, 201b, 301a, 301b, 401a, 401b) has a twist angle (120, 220, 320, 420) in the range from 15° to 45°.

8. The masonry drill head according to any of the preceding claims, wherein the sintered cemented carbide has a Vickers hardness is the range from 1250 HV10 to 1700 HV10, preferably from 1300 HV10 to 1500 HV10.

9. The masonry drill head according to any of the preceding claims, wherein the working end (104, 204, 304, 404) has a percussion knob protruding axially outwards.

10. A masonry drill head made from a sintered cemented carbide, **characterized in that** the masonry drill head has an at least section-wise planar joining end (103, 203, 303, 403) for heat induced joining to a shaft, a working end (104, 204, 304, 404) for shattering masonry material under a percussive motion, at least two conveying webs (101a, 101b, 201a, 201b, 301a, 301b, 401a, 401b) each emerging from the joining end (103, 203, 303, 403) and at least two conveying grooves (102, 202, 302, 402) each extending between two of the conveying webs (101a, 101b, 201a, 201b, 301a, 301b, 401a, 401b), wherein at least one of the conveying webs (101a, 101b, 201a, 201b, 301a, 301b, 401a, 401b) is twisted more on parts of the joining end (103, 203, 303, 403) than on parts of the working end (104, 204, 304, 404).

11. The masonry drill head according to claim 10, wherein the twisted conveying web (101a, 101b, 201a, 201b, 301a, 301b, 401a, 401b) has a twist angle (120, 220, 320, 420) which lies in the range from 15° to 45° on parts of the joining end (103, 203, 303, 403) and in the range from 0° to 15° on parts of the working end (104, 204, 304, 404).

12. The masonry drill head according to claim 10 or 11, wherein the masonry drill head has three or four conveying webs (101a, 101b, 201a, 201b, 301a, 301b, 401a, 401b) emerging from the joining end (103, 203, 303, 403).

13. A masonry drill head made from a sintered cemented carbide, **characterized in that** the masonry drill head has an at least section-wise planar joining end (103, 203, 303, 403) for heat induced joining to a shaft, a working end (104, 204, 304, 404) for shattering masonry material under a percussive motion, at least two conveying webs (101a, 101b, 201a, 201b, 301a, 301b, 401a, 401b) each emerging from the joining end (103, 203, 303, 403) and at least two conveying grooves (102, 202, 302, 402) each extending between two of the conveying webs (101a, 101b, 201a, 201b, 301a, 301b, 401a, 401b), wherein a cross-sectional solid material area of the masonry drill head increases towards the joining end (103, 203, 303, 403, such that a masonry material debris intake of at least one of the conveying grooves (102, 202, 302, 402) increases towards the working end (104, 204, 304, 404), wherein at least one of the conveying webs (101a, 101b, 201a, 201b, 301a, 301b, 401a, 401b) is twisted more on parts of the joining end (103, 203, 303, 403) than on parts of the working end (104, 204, 304,404).

14. The masonry drill head according to claim 13, wherein the masonry drill head has three or four conveying webs (101a, 101b, 201a, 201b, 301a, 301b, 401a, 401b) emerging from the joining end (103,203,303,403).

15. The masonry drill head according to any of the preceding claims, wherein the masonry drill head is welded to a steel shaft.
